(19) Europäisches Patentamt
European Patent Office
Office européen des brevets

(11) **EP 1 469 017 B1**

(12) **EUROPÄISCHE PATENTSCHRIFT**

(45) Veröffentlichungstag und Bekanntmachung des Hinweises auf die Patenterteilung:
**04.07.2007 Patentblatt 2007/27**

(51) Int Cl.:
***C08F 218/04*** *(2006.01)*    ***A23C 19/16*** *(2006.01)*
***C09D 131/02*** *(2006.01)*

(21) Anmeldenummer: **04008279.4**

(22) Anmeldetag: **06.04.2004**

(54) **Lebensmittelbeschichtungsmasse, Verfahren zu deren Herstellung und deren Verwendung**

Food coating substance, production and use thereof

Matière pour envelopper les produits alimentaires, sa production et son utilisation

(84) Benannte Vertragsstaaten:
**AT BE BG CH CY CZ DE DK EE ES FI FR GB GR HU IE IT LI LU MC NL PL PT RO SE SI SK TR**

(30) Priorität: **16.04.2003 DE 10317489**

(43) Veröffentlichungstag der Anmeldung:
**20.10.2004 Patentblatt 2004/43**

(73) Patentinhaber: **Celanese Emulsions GmbH**
**61476 Kronberg/Ts. (DE)**

(72) Erfinder:
• **Papenfuhs, Bernd, Dr.**
**63179 Obertshausen (DE)**
• **Schimanke, Holger, Dr.**
**4123 Allschwil (CH)**

(74) Vertreter: **Ackermann, Joachim**
**Postfach 11 13 26**
**60048 Frankfurt am Main (DE)**

(56) Entgegenhaltungen:
**WO-A-03/054041**

• **DATABASE WPI Week 197703 Derwent Publications Ltd., London, GB; AN 1977-05289Y XP002329927 -& SU 507 299 A (ALTAI BUTTER CHEESE) 25. März 1976 (1976-03-25)**

**Beschreibung**

Die vorliegende Erfindung betrifft eine Lebensmittelbeschichtungsmasse, ein verbessertes Verfahren zum Herstellen von Kunststoffdispersionen, die vorzugsweise für die Käsebeschichtung verwendet werden, durch Emulsionspolymerisation, und die Verwendung dieser Kunststoffdispersionen zur Beschichtung von Lebensmitteln.

Polymerdispersionen werden seit vielen Jahren in vielen Ländern für das Beschichten von Hartkäse verwendet. Durch diese Oberflächenbehandlung wird sowohl die Schimmelbildung auf dem Käse wie auch ein allzu schnelles Austrocknen der Käselaibe während des Reifeprozesses verhindert. Hartkäse benötigen eine mehrere Monate andauernde Zeit der Reife, während der sie in Räumen mit relativ hoher Luftfeuchtigkeit gelagert werden. Um in dieser Zeit die Bildung von Schimmel auf der Oberfläche des Käselaibes zu vermeiden, wurde der Käse in früheren Zeiten manuell immer wieder mit wässriger Essigsäure abgewaschen, was allerdings einen erheblichen Arbeitsaufwand darstellt. Sobald es möglich war, ist man deshalb dazu übergegangen, einen Schutzüberzug aus Kunststoff auf dem Käse anzubringen, um den lästigen Schimmelbefall zu unterbinden. Die für den Schutzüberzug verwendeten Latices, die im allgemeinen durch Emulsionspolymerisation hergestellt wurden, müssen aber selbst möglichst keimfrei sein und eine hohe Resistenz gegenüber mikrobiologischem Befall besitzen.

Die nach dem Stand der Technik zur Käsebeschichtung eingesetzten Kunststoffdispersionen sind bevorzugt wässrige Dispersionen auf der Basis von Vinylacetat-Dibutylmaleinat-Copolymerisaten, wie sie beispielsweise in dem SU Urheberschein Nr. 507299 beschrieben oder von der Hoechst AG unter der Bezeichnung ®Mowilith DM 2 KL in den Handel gebracht wurden. Nach dem von der Hoechst AG im April 1987 herausgegebenen Technischen Merkblatt "Mowilith DM 2 KL ca. 45%" handelt es sich bei dem Produkt um eine weichmacherfreie, wässrige Dispersion eines Vinylacetat-Di-n-butylmaleinat-Copolymerisats mit Polyvinylalkohol als Emulgator und Stabilisator (Schutzkolloid). Entsprechende Folgeprodukte wurden von Fa. Clariant und werden jetzt von Fa. Celanese Emulsions GmbH hergestellt und vertrieben.

Die Herstellung von Dispersionen mit sehr ähnlicher chemischer Zusammensetzung, die überzugsbildende Eigenschaften besitzen - wobei allerdings die Beschichtung von Käse nicht erwähnt ist - wird in der PL-B-172 130 beschrieben. Die Dispersionen auf der Basis von Copolymerisaten aus Vinylacetat, Maleinsäureester (bevorzugt Dibutylmaleinat) und ggf. weiteren Comonomeren enthalten noch einen oxethylierten Fettalkohol als Emulgator sowie ein Gemisch aus Hydroxyethylcellulose und Polyvinylalkohol als Schutzkolloid, wobei als Polyvinylalkohol ein solcher mit einer Viskosität der 4%-igen wässrigen Lösung von ca. 18 mPa.s und einem Verseifungsgrad von ca. 88% (PA 18-88) bevorzugt ist.

Die Anpassung der Kunststoffdispersionen an die Bedürfnisse der Abnehmer gestaltet sich oft sehr schwierig, weil deren Betriebe sehr strengen gesetzlichen Bestimmungen und dauernden Kontrollen unterworfen sind, was chemische Stoffe betrifft, die in unmittelbaren Kontakt zu Lebensmitteln kommen. Diese Bestimmungen enthalten meist Positivlisten mit chemischen Verbindungen, in denen die erlaubten Chemikalien erschöpfend aufgeführt sind.

Eine hohe Neigung der Kunststoffdispersionen zur Bildung von Aggregaten von Polymerpartikeln führt bei den Abnehmern fast regelmäßig zu Problemen, weil diese zu einer mangelhaften Scherstabilität führt. Daraus resultieren die meisten Schwierigkeiten bei der Käsebeschichtung. Die Bildung großer Aggregate von Polymerpartikeln kann aber auch während der Herstellung der Kunststoffdispersionen zu Inhomogenitäten im Reaktionsgemisch, zu mangelhafter Wärmeabfuhr und im Ergebnis zu schwankenden Produktviskositäten und damit zu nicht im tolerierbaren Bereich liegenden Qualitätsschwankungen führen.

Der Erfindung lag demnach die Aufgabe zugrunde, eine insofern verbesserte Dispersion als Basis für antimikrobiell ausgerüstete Hilfsstoffe für die Lebensmittelbeschichtung, insbesondere für die Käsereifung auf Basis eines Copolymeren von Vinylestern und Dialkylestern der Malein- oder Fumarsäure bereitzustellen, als sie sich gegenüber herkömmlichen Produkten bei gleichbleibend hoher Viskosität durch einen deutlich verbesserten Filmglanz, und damit ein verbessertes optisches Erscheinungsbild des beschichteten Lebensmittels, insbesondere des beschichteten Käselaibes, und gleichzeitig eine verbesserte Scherstabilität, und damit eine verringerte Aggregationsneigung der Polymerpartikeln, auszeichnet.

Eine Lösung dieser Aufgabe wird bereits in der nicht vorveröffentlichen deutschen Patentanmeldung Nr. 101 63 586.9 (entsprechend WO-A-03/054,041) vorgeschlagen. Darin wird als Schutzkolloid aber ein Mix aus Polyvinylalkoholen mit unterschiedlichem Verseifungsgrad (= Hydrolysegrad) angegeben.

Überraschend wurde nun gefunden, dass diese Aufgabe durch eine copolymere Poly(vinylester)-Dispersion gelöst wird, die entweder keinen oder nur vergleichsweise geringe Mengen an Celluloseether aufweist, also die Celluloseether in einer Menge von 0 bis 0,45 Gew.-% enthält, bezogen auf die Masse der Gesamtmonomeren, und gegebenenfalls weitere Stabilisierungsmittel.

Gegenstand der vorliegenden Erfindung ist somit eine celluloseetherfreie oder celluloseetherarme Lebensmittelbeschichtungsmasse enthaltend eine wässrige copolymere Poly(vinylester)-Dispersion, die

A) 100 Gewichtsteile eines Copolymerisates aus 40 bis 95 Gew.-% Vinylester von aliphatischen, gesättigten Carbonsäuren, vorzugsweise Fettsäuren mit einer Kettenlänge von $C_2$-$C_{18}$, 5 bis 60 Gew.-% Maleinsäureestern und/ oder Fumarsäureestern von einwertigen aliphatischen Alkoholen mit einer Kettenlänge von $C_1$-$C_{18}$, und gegebenenfalls weitere Comonomeren enthält,

B) 0,1 bis 1,0 Gewichtsteile eines Emulgators, vorzugsweise eines nichtionischen Emulgators,

C) 0 bis 0,45, vorzugsweise 0 bis 0,4, besonders bevorzugt 0 bis 0,3 Gewichtsteile, insbesondere 0 bis 0,15 Gewichtsteile eines Celluloseethers oder ganz besonders bevorzugt keinen Celluloseether, und

D) gegebenenfalls weitere Stabilisierungsmittel,

mit der Maßgabe, dass die Lebensmittelbeschichtungsmasse kein Gemisch von mindestens zwei Poly(vinylalkoholen) enthält, das besteht zu mindestens 0,1 Gewichtsteilen aus mindestens einem Poly(vinylalkohol) vom Hydrolyse-grad von 85 bis 90 Mol %, sowie mindestens 0,1 Gewichtsteilen aus mindestens einem Poly(vinylalkohol) vom Hydrolysegrad von über 90 Mol %.

Ein weiterer Gegenstand der vorliegenden Erfindung ist in der Verwendung einer wässrigen copolymeren Poly(vinylester)-Dispersion der vorstehend beschriebenen Zusammensetzung in Lebensmittelbeschichtungsmassen zu sehen.

Bei den Vinylestern des Copolymerisats von aliphatischen gesättigten Carbonsäuren handelt es sich typischerweise um Vinylester von aliphatischen gesättigten Carbonsäuren einer Kettenlänge $C_1$-$C_{18}$. Beispiele dafür sind Vinylformiat, Vinylacetat, Vinylpropionat, Vinylbutyrat, Vinylisobutyrat, Vinylpivalat, Vinyl-2-ethylhexanoat, Vinylester von α-verzweigten Carbonsäuren mit 9 bis 11 Kohlenstoffatomen im Säurerest (®Versaticsäuren), die Vinylester der Laurin-, Palmitin-, Myristin- und Stearinsäure. Bevorzugt werden Vinylester von aliphatischen gesättigten Carbonsäuren einer Kettenlänge $C_2$-$C_{18}$ eingesetzt. Der Anteil dieser Vinylester im Polymerisat beträgt mindestens 40 Gew. %, vorzugsweise mindestens 50 Gew. %.

Die Verwendung der Vinylester aliphatischer Fettsäuren ist bevorzugt, darunter insbesondere Vinylacetat. Die genannten Vinylester können im Polyvinylester auch nebeneinander vorliegen.

Bei den Maleinsäure- und Fumarsäureestern des Copolymerisats von einwertigen aliphatischen Alkoholen der Kettenlänge $C_1$-$C_{18}$ handelt es sich um solche von gesättigten Alkoholen der Kettenlänge $C_1$-$C_{18}$ oder um solche mit einwertigen aliphatischen ungesättigten Alkoholen der Kettenlänge $C_3$-$C_{18}$, vorzugsweise jedoch um solche mit gesättigten Alkoholen der Kettenlänge $C_4$-$C_8$, insbesondere Dibutylmaleinat oder Di-2-ethylhexylmaleinat und/oder -fumarat. Der Anteil dieser Monomergruppe, gegebenenfalls in Kombination mit weiteren Comonomeren, beträgt 5 bis 60 Gew. %, vorzugsweise 20 bis 50 Gew. %.

Die Verwendung von Dibutylmaleinat und/oder -fumarat ist besonders bevorzugt.

Zu weiteren Comonomeren, die im Copolymerisat Verwendung finden können, gehören die Acrylsäure- und Methacrylsäureester von einwertigen aliphatischen gesättigten Alkoholen und Etheralkoholen der Kettenlänge $C_1$-$C_{18}$, Vinylchlorid, Vinylidenchlorid, Acrylnitril und Methacrylnitril, Ethylen, Butadien, Isopren, Isobutylen, Propylen, $C_{14}$-$C_{16}$ alpha-Olefine, 2-Chlor-butadien, 2,3-Dichlorbutadien, Tetrafluorethylen, Styrol, Vinylether von einwertigen aliphatischen gesättigten Alkoholen der Kettenlänge $C_1$-$C_{18}$, Acrylsäure, Methacrylsäure, Crotonsäure, Maleinsäure, Fumarsäure, Itaconsäure, Vinylsulfonsäure, Styrolsulfonsäure, Halbester der Malein- bzw. Fumarsäure und der Itaconsäure mit einwertigen aliphatischen gesättigten Alkoholen der Kettenlänge $C_1$-$C_{18}$ sowie deren Alkali- und Ammoniumsalze, Vinylpyrrolidon, Amide der Acryl- und Methacrylsäure und N-Methylolamide der Acryl- und Methacrylsäure sowie deren Ether, N-Vinyl-N-methylacetamid, Acrylsäureester des Diethylaminoethanols und/oder Methacrylsäureester des Dimethylaminoethanols, Acrylsäure- und Methacrylsäureester von zweiwertigen aliphatischen Alkoholen der Kettenlänge $C_2$-$C_{18}$, Divinyl- und Diallylester von gesättigten und ungesättigten aliphatischen Dicarbonsäuren der Kettenlänge $C_3$-$C_{18}$, Vinyl- und Allylester der Acrylsäure und Crotonsäure, Triallylcyanurat, Natrium-2-sulfoethylmethacrylat, sowie die Ester aliphatischer Carbonsäuren der Kettenlänge $C_3$-$C_{12}$ mit ungesättigten Alkoholen der Kettenlänge $C_3$-$C_{18}$, oder die Ester von ungesättigten aliphatischen Dicarbonsäuren mit Polyethylenglykolen und/oder Polypropylenglykolen. Bevorzugt sind als weitere Comonomere Ethylen, die Acrylsäureester einwertiger aliphatischer gesättigter Alkohole der Kettenlänge $C_4$-$C_8$ oder $C_{14}$-$C_{16}$ alpha-Olefine.

Vorzugsweise werden jedoch neben den beiden oben genannten Gruppen der Vinylester und Maleinate keine weiteren Comonomere verwendet.

Als Emulgatoren eignen sich Natrium-, Kalium- und Ammoniumsalze von gradkettigen aliphatischen Carbon-säuren der Kettenlänge $C_{12}$-$C_{20}$, Natriumhydroxyoctadecansulfonat, Natrium-, Kalium- und Ammoniumsalze von Hy-droxyfettsäuren der Kettenlänge $C_{12}$-$C_{20}$ und deren Sulfierungs- bzw. Acetylierungsprodukte, Alkylsulfate, auch als Triethanolaminsalze, Alkyl-($C_{10}$-$C_{20}$)-sulfonate, Alkyl($C_{10}$-$C_{20}$)-arylsulfonate, Dimethyldialkyl($C_8$-$C_{18}$)-ammoniumchlo-rid, Acyl-, Alkyl-, Oleyl- und Alkylaryloxethylate und ihre Sulfierungsprodukte, Alkalisalze der Sulfobernsteinsäureester mit aliphatischen gesättigten einwertigen Alkoholen der Kettenlänge $C_4$-$C_{16}$, Sulfobernsteinsäure-4-Ester mit Polyethylenglykolethern von einwertigen aliphatischen Alkoholen der Kettenlänge $C_{10}$-$C_{12}$ (Di-Natriumsalz), Sulfobernsteinsäure-4-Ester mit Polyethylenglykolnonylphenylether (Di-Natriumsalz), Sulfobernsteinsäure bis-cyclohexylester (Natriumsalz), Ligninsulfonsäure sowie deren Calcium-, Magnesium-, Natrium- und Ammoniumsalze, Polyoxyethylensorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium sowie Copolymere aus Ethylenoxyd und Propylenoxyd mit einem Mindestgehalt von 10 Gew. % Ethylenoxid. Vorzugsweise werden als Emulgatoren verwendet: Natriumlaurylsulfat; Natriumlaurylethersulfat, ethoxyliert (3 Ethylenoxidgruppen); die Polyethylenglykol(4-20)ether des Oleylalkohols sowie die Polyethenoxid (4-14)ether von Nonylphenol.

Insbesondere eignen sich nichtionische Emulgatoren und zwar die Polyethenoxid(4-20)ether von Oleylalkohol.

Die Emulgatoren werden von 0,1 bis 1,0 Gew. %, bezogen auf die Menge der Gesamtmonomeren, verwendet, vorzugsweise 0,2 bis 0,85 Gew. %, und besonders bevorzugt 0,25 bis 0,5 Gew. %.

Als Celluloseether eignen sich erfindungsgemäß Methylcellulosen, Hydroxyethyl- und Propylcellulosen sowie Natriumcarboxy-methylcellulose. Diese können erfindungsgemäß zur Stabilitätsverbesserung eingesetzt werden. Die Celluloseether können auch als Verdickungsmittel verwendet werden und ggf. erst nach der Beendigung der Polymerisation zur Einstellung einer geeigneten Applikationsviskosität zugesetzt werden.

Als weitere Stabilisierungsmittel können Polyvinylalkohole eingesetzt werden.

Erfindungsgemäß können beliebige Polyvinylalkohole eingesetzt werden, wobei Mischungen von Polyvinylalkoholen mit gleichen Hydrolysegraden bevorzugt sind und die Mischungen gemäß WO-A-03/054,041 ausgeschlossen sind. Besonders geeignete Polyvinylalkohole besitzen einen Hydrolysegrad im Bereich von 85 bis 90 Mol-% und Viskositäten der 4 Gew. %-igen wässrigen Lösungen bei 20 °C von 2 bis 70 mPa.s. Der Polyvinylalkohol dient als Schutzkolloid. Seine Gesamtmenge beträgt 1 bis 10 Gew. %, bezogen auf die Masse der Gesamtmonomeren. Vorzugsweise beträgt die verwendete Menge 2 bis 9 Gew. %, und besonders bevorzugt 3 bis 8 Gew. %.

Erfindungsgemäß eingesetzte Polyvinylalkohole weisen vorzugsweise einen einheitlichen Hydrolysegrad auf, d.h. es handelt sich dabei nicht um Gemische von Polyvinylalkoholen mit unterschiedlichem Hydrolysegrad.

Besonders bevorzugt eingesetzt werden Polyvinylalkohole mit einheitlichem Hydrolysegrad und unterschiedlichen Molekulargewichten.

Die Viskositäten der erfindungsgemäß eingesetzten Polyvinylalkohole bewegen sich typischerweise im Bereich von 2 - 70 mPa•sec (gemessen inn 4 %-iger wässriger Lösung bei 20°C).

Eine bevorzugte Ausführungsform der Erfindung stellt eine wässrige copolymere Poly(vinylester)-Dispersion als Bestandteil einer Lebensmittelbeschichtungsmasse dar, enthaltend

A) 100 Gewichtsteile eines Copolymerisates aus 40 bis 95 Gew.-% Vinylacetat und 5 bis 60 Gew.-% Dibutylmaleinat und/oder -fumarat, und gegebenenfalls weiteren Comonomeren,

B) 0,25 bis 0,7 Gewichtsteile, bevorzugt 0,25 bis 0,5 Gewichtsteile eines ethoxylierten Oleylalkohols,

C) 0 bis 0,3 Gewichtsteile einer Hydroxyethylcellulose
sowie

D) 3 bis 8 Gewichtsteile Polyvinylalkohol.

Der Feststoffgehalt der Dispersion beträgt 20 bis 65 Gew. %, vorzugsweise 30 bis 60 Gew. %, und besonders bevorzugt 40 bis 55 Gew. %.

Das einfache Weglassen der Celluloseether oder die Verringerung deren Menge in der sonst nicht weiter modifizierten Dispersion führt normalerweise zu einer mangelhaften Stabilität und damit zu unbrauchbaren Produkten.

Dies zeigt sich beispielsweise an gegenüber dem Standard deutlich erhöhten Siebrückstandswerten, die eine unwirtschaftliche Verkürzung der Zeitintervalle zwischen den Filterwechseln zu Folge haben, mitunter sogar an der Koagulation der Dispersionen.

Die mit dem Celluloseether entnommene kolloidale Stabilisierung der Dispersion muss dem System auf andere Weise wieder zugeführt werden, was erfindungsgemäß durch eine zielgerichtete Anpassung der Rezepturen der nach dem Dosierverfahren erhältlichen Dispersionen bewirkt wird, nämlich durch Einsatz entsprechender Mengen an Stabilisatoren und/oder Emulgatoren, vorzugsweise 0,25-0,5 Gew. % an Emulgatoren und/oder 3-8 Gew.% Polyvinylalkohol oder deren Gemischen mit einheitlichem Hydrolysegrad.

Die Herstellung der erfindungsgemäßen Dispersionen erfolgt durch radikalische Emulsionspolymerisation. Die Polymerisation wird vorzugsweise im Dosierverfahren durchgeführt, wobei erfindungsgemäß ein relativ großer Teil der Monomeren, vorzugsweise 10 bis 15 Gew. %, bezogen auf die Masse der Gesamtmonomeren, zum Starten der Polymerisation vorgelegt werden. Bei gleichzeitig nur geringfügig erhöhten Mengen an Emulgator und Polyvinylalkohol lassen sich so Dispersionen mit nur geringem Anteil an Celluloseether herstellen, deren verbesserte anwendungstechnische Eigenschaften vollständig erhalten bleiben und die dabei trotzdem eine mit bekannten Dispersionen vergleichbare Stabilität aufweisen.

Als Initiatoren für die Emulsionspolymerisation werden beispielsweise verwendet: Wasserstoffperoxid, Benzoylperoxid, Cyclohexanonperoxid, Isopropylcumylhydroperoxid, Persulfate des Kaliums, Natriums und Ammoniums, Peroxide von geradzahligen gesättigten einwertigen aliphatischen Carbohsäuren der Kettenlänge $C_8$-$C_{12}$, Tertiärbutyl-hydroperoxid, Ditertiärbutylperoxid, Diisopropylpercarbonat, Azoisobuttersäuredinitril, Acetylcyclohexansulfonylperoxid, Tertiärbutylperbenzoat, Tertiärbutylperoctoat, Bis-(3,5,5-trimethyl)-hexanoylperoxid, Tertiärbutylperpivalat, Hydroperoxypinan, p-Methanhydroperoxid. Die vorgenannten Verbindungen können auch innerhalb eines Redoxsystems verwendet werden, wobei Übergangsmetallsalze wie Eisen-II-sulfat oder andere Reduktionsmittel mitverwendet werden. Als Reduktionsmittel bzw. Regler können Alkalisalze der Oxymethansulfinsäure, Mercaptane der Kettenlänge $C_{10}$-$C_{14}$, Buten-(I)-ol-(3), Hydroxylaminsalze, Natriumdialkyldithiocarbamat, Natriumbisulfit, Ammoniumbisulfit, Natriumdithionit, Diisopropylxanthogendisulfid, Ascorbinsäure, Weinsäure, Isoascorbinsäure, Borsäure, Harnstoff und Ameisensäure mitverwendet werden.

Vorzugsweise werden jedoch wasserlösliche Persulfate, insbesondere Ammoniumpersulfat oder Natriumpersulfat zum Starten der Polymerisation verwendet.

Nach Abschluss der Polymerisation kann zur Entmonomerisierung eine weitere Nachbehandlung, vorzugsweise mit Redoxkatalysatoren, wie zum Beispiel Kombinationen aus Oxidationsmitteln mit Reduktionsmitteln wie Ascorbinsäure, angeschlossen werden.

Der Dispersion können am Ende weitere Hilfsstoffe zugesetzt werden. In diese Gruppe fallen beispielsweise die genannten Stabilisierungsmittel. Als Zusätze eignen sich Stabilisatoren wie Neutralisierungsmittel und Komplexbildner. Beispielhaft genannt seien Alkali-, Ammonium-, Calciumhydroxide, -carbonate,- phosphate, Alkalisalze der Ethylendiamintetraessigsäure und N-Hydroxyethylethylendiamin-tri-essigsäure, Zitronensäure, sowie Natriumacetat und Phosphorsäure, Ammoniumchlorid, Natriumsulfat, Homopolymerisat aus 2-Acrylamido-2-methyl-propansulfon-säure und ihrer Natrium-, Kalium- und Ammoniumsalze, sowie Stoffe zum Schutze der Dispersion gegen mikrobiellen Befall. Vorzugsweise werden Konservierungsmittel verwendet, die in den einschlägigen Verordnungen zu lebensmittelrechtlichen Vorschriften über Zusatzstoffe für Käse zugelassen sind.

Zur Einstellung der Dispersion zur fertigen Käsedeckmasse können die in den einschlägigen Positivlisten zugelassenen Farbstoffe wie Karoten (E 160a), Annato (E 160b), Carbo Medicinalis vegetabilis (E 153), Titandioxid (E 171), Tartrazin (E 102), Chinolingelb (E 104), Sonnengelb FCF (E 110), Cochenillerot A (E 124), Indigotin (E 132), Brillantschwarz BN (E 151) oder Litholrubin BK (E 180) verwendet werden.

Eine besonders bevorzugte Auswahl der verwendeten Rohstoffe zur Herstellung der Dispersion und zur Konfektionierung entspricht den Richtlinien der holländischen Warenwet B.1.4 und/oder der "XIV. Empfehlung, Teil B der BGVV".

Die erfindungsgemäßen Dispersionen mit weniger oder keinem Celluloseether zeichnen sich gegenüber herkömmlichen Produkten durch eine höhere mikrobiologische Stabilität aus. Celluloseether sind nämlich als modifizierte Naturstoffe sehr gut biologisch abbaubar und ihre Gegenwart erhöht demzufolge die Neigung der Produkte zum Verderb.

Ein aus produktionstechnischer Sicht erheblicher Vorteil der Erfindung ist die signifikant schmalere Bandbreite der Viskosität, mit der die Dispersionen nach der Emulsionspolymerisation anfallen, weil so die Einhaltung der Produktspezifikation, die dem Kunden bei Lieferung großer Mengen zugesichert wird, wesentlich erleichtert wird.

Die erfindungsgemäß hergestellten Dispersionen zeichnen sich ferner bei gleichbleibend hoher Viskosität durch einen deutlich verbesserten Filmglanz und gleichzeitig durch eine verbesserte Scherstabilität aus, weil der Grad der Aggregation ihrer Polymerpartikeln stark reduziert ist. Sie eignen sich speziell als Bestandteil zur Herstellung von Lebensmitteldeckmassen, insbesondere als Hilfsmittel für die Hartkäsereifung.

Die folgenden Beispiele dienen zur Erläuterung der Erfindung. Angaben über Teile und Prozente beziehen sich auf das Gewicht, sofern nicht anders vermerkt.

Allgemeine Beschreibung der Polymerisation nach dem Dosierverfahren:

In einem 10 l fassenden zylinderförmigen Glasreaktor, ausgestattet mit zwei Tropftrichtern, Innenthermometer, Rückflußkühler, Anker-Rührer und einer Heizvorrichtung (Wasserbad) wurde am Tag vor der Emulsionspolymerisation die Flotte bereitet.

Hierzu wurde die gesamte Wassermenge vorgelegt und unter Rühren bei Raumtemperatur das Schutzkolloid (®Tylose und/oder ®Mowiole), der Emulgator (®Genapol O-100) und Natriumacetat nacheinander langsam zugegeben.

Nach einem dreistündigem Löseprozeß bei ca. 90°C Innentemperatur ließ man den Reaktor abkühlen und über Nacht stehen.

Dann wurde der Ansatz unter Rühren mit Essigsäure versetzt und 150 bzw. 300 g der Monomer-Mischung (Monomer-Vorlage) einemulgiert. Anschließend wurde der Reaktor aufgeheizt und bei einer Temperatur von 65 °C durch Zugabe der ersten Ammoniumpersulfat-Teilmenge (APS I) die Polymerisation gestartet.

Nach 15 Minuten wurde mit der gleichmäßigen parallelen Dosierung der restlichen Monomer-Mischung und des APS II innerhalb einer Zeit von 4 Stunden begonnen; die Reaktionstemperatur wurde währenddessen in einem Bereich von 68 bis 70 °C konstant gehalten (Badtemperatur ca. 66 °C).

Als die Dosierphase abgeschlossen war, gab man APS III zu und ließ die Innentemperatur durch schrittweises Angleichen der Außentemperatur (bis 90 °C) auf ein Maximum von ca. 92 °C ansteigen. Danach wurde noch eine Stunde bei einer Badtemperatur von 90 °C nachpolymerisiert und danach abgekühlt.

Zur Reduzierung des Restmonomer-Gehalts wurde als Redox-System bei einer Temperatur von 70 °C tert.-Butylhydroperoxid (®Trigonox AW 70) und bei 65 °C Ascorbinsäure zugegeben. Die Einstellung auf pH 5 erfolgte unterhalb von 40 °C mit 10 %-iger Natronlauge.

Rezepturen der Beispiele und des Vergleichsbeispiels

Das Vergleichsbeispiel entspricht einer 0,5 % Celluloseether (immer bezogen auf Masse an Gesamtmonomer) enthaltenden Standardrezeptur, wohingegen die Beispiele 1 und 2 keinen Celluloseether bzw. einen reduzierten Gehalt (0,25 %) aufweisen. Durch höhere Monomer-Vorlage und erhöhte Konzentrationen an Polyvinylalkohol (®Mowiol 40-88) und Emulgator (®Genapol O-100) sind die Dispersionen außerdem hinsichtlich ihrer Stabilität optimiert worden.

Alle Tabellenangaben sind Gramm-Mengen; die in Klammern angegebenen Werte beziehen sich auf als Lösungsmittel verwendetes destilliertes Wasser.

| | Beispiel 1 | Beispiel 2 | Vergleichsbeispiel |
|---|---|---|---|
| **Flotte:** | | | |
| Destilliertes Wasser | 3018 | 3009 | 3000 |
| Mowiol 40-88 | 120 | 105 | 90 |
| Mowiol 8-88 | 60 | 60 | 60 |
| Tylose H 4000 | 0 | 7.5 | 15 |
| Genapol O-100 | 9 (= 0,3%) | 7.5 (= 0,25%) | 6 (= 0,2%) |
| Natriumacetat • 3 $H_2O$ | 4.9 | 4.9 | 4.9 |
| Eisessig | 3 | 3 | 3 |
| **Monomere:** | | | |
| Vinylacetat | 1725 | 1725 | 1725 |
| Dibutylmaleinat | 1225 | 1225 | 1225 |
| Monomer-Vorlage | 300 | 300 | 150 |
| Initiator: | | | |
| APS I | 5,4(54) | 5,4(54) | 5,4(54) |
| APS II | 1,5 (150) | 1,5 (150) | 1,5 (150) |
| APS III | 1,5(30) | 1,5(30) | 1,5(30) |
| **Nachgaben:** | | | |
| ®Trigonox AW 70 | 2.4(50) | 2.4(50) | 2.4(50) |
| Ascorbinsäure | 2(50) | 2(50) | 2(50) |
| Natronlauge (10 %-ig) | 70 | 70 | 70 |

Die unter den Markennamen ®Mowiol, ®Tylose und ®Genapol angegebenen Substanzen sind Handelsprodukte der Firma Clariant AG/CH, ®Trigonox ist eine eingetragene Marke der Firma Akzo Nobel B. V./NL.

Als Maß für die Stabilität der Dispersionen wird direkt nach der pH-Einstellung der sogenannte Siebrückstand bestimmt.

Der Siebrückstand entspricht dem Anteil von groben Stippen und Koagulat in Polymer-Dispersionen und wird wie folgt gemessen:

100,0 g der zu untersuchenden homogenisierten Dispersionsprobe werden vorsichtig mit 500,0 g destilliertem Wasser verdünnt, ohne dass sich dabei Schaum bildet. Anschließend wird die Mischung durch ein vorher tariertes Sieb, bestehend aus einem in geeigneter Weise eingespannten Stück entfetteten Stahldrahtgewebes (Edelstahl-Feindrahtgewebe Nr. 375VA140K, Typ "Multi", Art.-Nr. 00100540-15, Hersteller: Fa. Haver & Boecker, 47400 Oelde/Westfalen) mit einer Maschenweite von 0,04 mm, gegossen und der Rückstand vorsichtig mit dem zum Ausspülen des Probengefäßes (quantitative Überführung) verwendeten destillierten Wasser bis zur Schaumfreiheit "nachgewaschen". Das nasse Sieb wird nun auf eine saubere Petrischale gelegt und mindestens eine Stunde lang bei Temperaturen von 105 °C bis 135 °C getrocknet. Schließlich wird das abgekühlte Sieb zurückgewogen und mit Hilfe der Einwaage der Siebrückstand in Gewichts-Prozent berechnet. Die in der Tabelle angegebenen Werte entsprechen dem Mittelwert einer so durchgeführten Doppelbestimmung.

**Brookfield-Viskosität**

Geräte:

Brookfield-Viskosimeter RVT-DVII mit Spindeln Nr. 1 - 7
Gefäß (Durchmesser 90 - 92 mm, Höhe 150 - 160 mm)

Die zu prüfende Probe wird im Messgefäß per Hand mit einem Glasstab durchgerührt. Es ist darauf zu achten, dass sich in der Probe keine Luftblasen befinden. Dann wird eine geeignete Spindel, ggf. mehrere probieren, am Gerät befestigt und bis zur oberen Markierung in die Dispersion eingetaucht. Wenn nicht anders vorgesehen, wird am Gerät die Umdrehungsgeschwindigkeit von 20 min$^{-1}$ eingestellt. Nach Einschalten des Viskosimeters lässt man bis zur Konstanz des Messwertes rotieren (meist erreicht nach ca. 10 s) und notiert dann den Messwert. Falls keine Konstanz erreicht wird, muß eine andere Spindel verwendet werden.

**Feststoff-Gehalt**

Probenvorbereitung:

Homogenisierung durch Umrühren mit Glasstab

Durchführung:

Ca. 1 bis 2 g der Probe werden in einer vorher gewogenen Aluschale (G 1) sehr schnell gleichmäßig verstrichen und unmittelbar danach erneut gewogen (G 2).

Anschließend wird die so befüllte Schale sofort in einen Trockenschrank (ohne technische Belüftung) gegeben und mindestens über eine Zeit von 12 h (über Nacht), jedoch nicht länger als 72 h, bei Temperaturen im Bereich von 105 bis 130°C getrocknet. Nach dem Abkühlen wird die Schale wiederum gewogen (G 3). Es ist eine Doppelbestimmung durchzuführen und der Mittelwert anzugeben.

Unterscheiden sich die Einzelergebnisse um mehr als 0,3 %, ist die Messung zu wiederholen.

$$F.G. \ = \ \frac{(G\,3 - G\,1) \times 100}{G2 - G1} \ (\%)$$

**pH-Wert**

Glaselektroden-Einstab-Messzelle nach DIN 19 261, wie z.B.
pH-Meter CG 817 T (Fa. Schott-Geräte, D-6238 Hofheim)

Die Probe wird nach Kompensation der Temperatur mittels Eintauchens der Glaselektrode (die ständig in einer 3,5-molaren Kaliumchloridlösung eintauchend aufbewahrt wird) gemessen. Sofort nach der Messung wird die Glaselektrode mit E-Wasser abgespült.

**Messung des Filmglanzes**

Die Messung des Filmglanzes erfolgte mit einem Dr. Lange Labor-Reflektometer RL 3 der Firma Dr. Bruno Lange GmbH. Die zu untersuchenden Proben wurden mit einer Nassschichtdicke von 300 $\mu$m mit Hilfe eines Kastenrakels der Firma Erichsen auf eine Glasplatte aufgezogen und anschließend 24 Stunden bei Raumtemperatur getrocknet. Das Laborreflektometer wird mit Hilfe des Kalibrierstandards A (polierte, hochglänzende Schwarzglasplatte) zunächst kalibriert. Der Messkopf des Reflektometers wird auf die Oberfläche der zu untersuchenden Probe aufgesetzt und die Messung ausgelöst. Das Reflektometer misst nacheinander bei verschiedenen Einfallswinkeln. Die Messung wird als Dreifachbestimmung an drei verschiedenen Aufsetzpunkten auf der zu untersuchenden Oberfläche durchgeführt und der arithmetische Mittelwert berechnet. Ausgewertet wurden die Ergebnisse der Messungen bei 20 ° Einfallswinkel, deren gemittelte Skalenteile angegeben werden.

Die für die Beispiele und das Vergleichsbeispiel ermittelten Messwerte sind in der nachstehenden Tabelle aufgeführt.

| | Beispiel 1 | Beispiel 2 | Vergleichsbeispiel |
|---|---|---|---|
| Siebrückstand (%) | 0,021 | 0,026 | 0,088 |
| Brookfield Viskosität (mPa•s) | 20.100 | 17.200 | 29.200 |
| Feststoffgehalt (%) | 47,9 | 48,1 | 48,1 |
| pH-Wert | 5 | 5 | 4,8 |
| Glanzmessung (Skalenteile) | 124 | 130 | 90 |
| Teilchenaggregation[1] | 1-10 $\mu$m | 1-10 $\mu$m | 10-100 $\mu$m |
| [1] ermittelt durch mikroskopische Bildanalyse | | | |

**Patentansprüche**

1.  Lebensmittelbeschichtungsmasse enthaltend eine wässrige, copolymere Poly(vinylester)-Dispersion, die

    A) 100 Gewichtsteile eines Copolymerisats aus 40 bis 95 Gew. % Vinylestern von aliphatischen, gesättigten Carbonsäuren und 5 bis 60 Gew.-% Maleinsäureestern und/oder Fumarsäureestern von einwertigen aliphatischen Alkoholen mit einer Kettenlänge von $C_1$-$C_{18}$ und gegebenenfalls weiteren Comonomeren enthält,
    B) 0,1 bis 1,0 Gewichtsteile eines Emulgators,
    C) 0 bis 0,45 Gewichtsteile eines Celluloseethers, und
    D) gegebenenfalls weitere Stabilisierungsmittel,

    mit der Maßgabe, dass die Lebensmittelbeschichtungsmasse kein Gemisch von mindestens zwei Poly(vinylalkoholen) enthält, das besteht zu mindestens 0,1 Gewichtsteilen aus mindestens einem Poly(vinylalkohol) vom Hydrolysegrad von 85 bis 90 Mol %, sowie mindestens 0,1 Gewichtsteilen aus mindestens einem Poly(vinylalkohol) vom Hydrolysegrad von über 90 Mol

2.  Lebensmittelbeschichtungsmasse nach Anspruch 1, **dadurch gekennzeichnet, dass** die Dispersion Vinylester von aliphatischen gesättigten Carbonsäuren der Kettenlänge $C_2$-$C_{18}$ enthält, insbesondere Vinylacetat, Vinylpropionat, Vinylbutyrat, Vinylisobutyrat, Vinylpivalat, Vinyl-2-ethyl-hexanoat, Vinylester von $\alpha$-verzweigten Carbonsäuren mit 9 bis 11 Kohlenstoffatomen im Säurerest oder Vinylester der Laurin-, Palmitin-, Myristin- und Stearinsäure oder Mischungen von diesen enthält, vorzugsweise Vinylacetat.

3.  Lebensmittelbeschichtungsmasse nach Anspruch 1, **dadurch gekennzeichnet, dass** die Dispersion die Vinylester von aliphatischen gesättigten Carbonsäuren in einer Menge von vorzugsweise mindestens 50 Gew.-% enthält.

4.  Lebensmittelbeschichtungsmasse nach Anspruch 1, **dadurch gekennzeichnet, dass** die Dispersion als Maleinsäure- und Fumarsäureester von einwertigen aliphatischen Alkoholen der Kettenlänge $C_1$-$C_{18}$, Ester von gesättigten Alkoholen der Kettenlänge $C_1$-$C_{16}$ oder Ester von einwertigen aliphatischen ungesättigten Alkoholen der Kettenlänge $C_3$-$C_{18}$, vorzugsweise Ester mit gesättigten Alkoholen der Kettenlänge $C_4$-$C_8$, insbesondere Dibutylmaleinat oder Di-2-ethylhexylmaleinat und/oder -fumarat, enthält.

**5.** Lebensmittelbeschichtungsmasse nach Anspruch 1, **dadurch gekennzeichnet, dass** die Dispersion die Monomergruppe der Maleinsäure- und Fumarsäureester gegebenenfalls in Kombination mit weiteren Comonomeren, in einer Menge von 20 bis 50 Gew. % enthält.

**6.** Lebensmittelbeschichtungsmasse nach Anspruch 1, **dadurch gekennzeichnet, dass** die Dispersion als Emulgatoren, Komponente B), Natrium-, Kalium- und Ammoniumsalze von gradkettigen aliphatischen Carbonsäuren der Kettenlänge $C_{12}$-$C_{20}$, Natriumhydroxyoctadecansulfonat, Natrium-, Kalium- und Ammoniumsalze von Hydroxyfettsäuren der Kettenlänge $C_{12}$-$C_{20}$ und deren Sulfierungs- bzw. Acetylierungsprodukte, Alkylsulfate, Triethanolaminsalze, Alkyl-($C_{10}$-$C_{20}$)-sulfonate, Alkyl($C_{10}$-$C_{20}$)-arylsulfonate, Dimethyldialkyl($C_8$-$C_{18}$)-ammoniumchlorid, Acyl-, Alkyl-, Oleyl- und Alkylaryloxethylate und ihre Sulfierungsprodukte, Alkalisalze der Sulfobernsteinsäureester mit aliphatischen gesättigten einwertigen Alkoholen der Kettenlänge $C_4$-$C_{16}$, Sulfobernsteinsäure-4-Ester mit Polyethylenglykolethern von einwertigen aliphatischen Alkoholen der Kettenlänge $C_{10}$-$C_{12}$ (Di-Natriumsalz), Sulfobernsteinsäure-4-Ester mit Polyethylenglykolnonylphenylether (Di-Natriumsalz), Sulfobernsteinsäure bis-cyclohexylester (Natriumsalz), Ligninsulfonsäure sowie deren Calcium-, Magnesium-, Natrium- und Ammoniumsalze, Polyoxyethylensorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium oder Copolymere aus Ethylenoxyd und Propylenoxyd mit einem Mindestgehalt von 10 Gew. % Ethylenoxid enthält, vorzugsweise Natriumlaurylsulfat, Natriumlaurylethersulfat, Polyethylenglykol(4-20)ether des Oleylalkohols oder Polyethenoxid(4-14)ether von Nonylphenol.

**7.** Lebensmittelbeschichtungsmasse nach Anspruch 1, **dadurch gekennzeichnet, dass** die Dispersion die Emulgatoren in einer Menge im Bereich von 0,2 bis 0,85 Gew.-Teilen enthält, bevorzugt von 0,25 bis 0,5 Gew.-Teilen.

**8.** Lebensmittelbeschichtungsmasse nach Anspruch 1, **dadurch gekennzeichnet, dass** die Dispersion als Komponente C) Celluloseether wie Methylcellulose, Hydroxyethyl- und Propylcellulose oder Natriumcarboxy-methylcellulose enthält oder Mischungen von diesen.

**9.** Lebensmittelbeschichtungsmasse nach Anspruch 1, **dadurch gekennzeichnet, dass** die Dispersion die Celluloseether in einer Menge im Bereich von 0 bis 0,4 Gew.-Teilen enthält, vorzugsweise von 0 bis 0,3 Gew.-Teilen, besonders bevorzugt von 0 bis 0,15 Gew.-Teilen und ganz besonders bevorzugt keinen Celluloseether.

**10.** Lebensmittelbeschichtungsmasse nach Anspruch 1, **dadurch gekennzeichnet, dass** die Dispersion als weitere Stabilisierungsmittel Polyvinylalkohol enthält, der einen Hydrolysegrad im Bereich von 85 bis 90 Mol % und der eine Viskosität seiner 4 Gew.-%-igen wässrigen Lösung bei einer Temperatur von 20 °C im Bereich von 2 bis 70 mPa.s besitzt.

**11.** Lebensmittelbeschichtungsmasse nach Anspruch 1, **dadurch gekennzeichnet, dass** die Gesamtmenge von Polyvinylalkohol in der Dispersion im Bereich von 1 bis 10 Gew. % liegt, bezogen auf die Masse der Gesamtmonomeren, vorzugsweise von 2 bis 9 Gew. %, und besonders bevorzugt von 3 bis 8 Gew. %.

**12.** Lebensmittelbeschichtungsmasse nach Anspruch 10, **dadurch gekennzeichnet, dass** das weitere Stabilisierungsmittel ein Gemisch von Polyvinylalkoholen mit einheitlichem Hydrolysegrad ist.

**13.** Lebensmittelbeschichtungsmasse nach Anspruch 1, **dadurch gekennzeichnet, dass** sie eine wässrige, copolymere Poly(vinylester)-Dispersion enthält, die

A) 100 Gewichtsteile eines Copolymerisates aus 40 bis 95 Gew. % Vinylacetat und 5 bis 60 Gew.-% Dibutylmaleinat und/oder Fumarat, und gegebenenfalls weiteren Comonomeren enthält,
B) 0,25 bis 0,5 Gewichtsteile eines ethoxylierten Oleylalkohols,
C) 0 bis 0,3 Gewichtsteile einer Hydroxyethylcellulose, sowie
D) 3 bis 8 Gewichtsteile Polyvinylalkohol

und dass der Feststoffgehalt der Dispersion im Bereich von 20 bis 65 Gew. % liegt, vorzugsweise von 30 bis 60 Gew. %, besonders bevorzugt von 40 bis 55 Gew. %.

**14.** Verfahren zum Herstellen einer wässrigen, copolymeren Poly(vinylester)-Dispersion als Bestandteil in einer Lebensmittelbeschichtungsmasse nach Anspruch 1 durch radikalische Emulsionspolymerisation, bei der die Zugabe der Monomeren im Batchverfahren, im Zulaufverfahren, oder im kombinierten Batch/Zulauf-Verfahren vorgenommen wird, wobei vorzugsweise Monomere in einer Menge im Bereich von 1 bis 15 Gew. %, bezogen auf die Gesamtmenge an Monomeren, zum Starten der Polymerisation vorgelegt werden.

**15.** Verwendung einer wässrigen, copolymeren Poly(vinylester)-Dispersion enthaltend 100 Gewichtsteile Komponente A), 0,1 bis 1,0 Gewichtsteile Komponente B), 0 bis 0,45 Komponente C) und gegebenenfalls Komponente D) nach Anspruch 1 zum Beschichten von Lebensmitteln.

**16.** Verwendung einer Lebensmittelbeschichtungsmasse nach Anspruch 1 beim Herstellen von Hartkäse.

**Claims**

**1.** A food-coating composition comprising an aqueous copolymer poly(vinyl ester) dispersion which comprises

A) 100 parts by weight of a copolymer of from 40 to 95% by weight of vinyl esters of aliphatic saturated carboxylic acids and from 5 to 60% by weight of maleic esters and/or fumaric esters of monohydric aliphatic alcohols having a chain length of $C_1$-$C_{18}$ and if appropriate other comonomers,
B) from 0.1 to 1.0 part by weight of an emulsifier,
C) from 0 to 0.45 part by weight of a cellulose ether, and
D) if appropriate other stabilizers,

with the proviso that the food coating composition does not comprise a mixture of at least two poly(vinyl alcohols), at least 0.1 part by weight of which comprises at least one poly(vinyl alcohol) of a degree of hydrolysis of 85 to 90 mol% and also at least 0.1 part by weight of which comprises at least one poly(vinyl alcohol) of a degree of hydrolysis of greater than 90 mol%.

**2.** The food-coating composition as claimed in claim 1, wherein the dispersion comprises vinyl esters of aliphatic saturated carboxylic acids of chain length $C_2$-$C_{18}$, in particular vinyl acetate, vinyl propionate, vinyl butyrate, vinyl isobutyrate, vinyl pivalate, vinyl 2-ethylhexanoate, vinyl esters of $\alpha$-branched carboxylic acids having 9 to 11 carbon atoms in the acid radical or vinyl esters of lauric, palmitic, myristic and stearic acids or mixtures of these, preferably vinyl acetate..

**3.** The food-coating composition as claimed in claim 1, wherein the dispersion comprises the vinyl esters of aliphatic saturated carboxylic acids in an amount of preferably at least 50% by weight.

**4.** The food-coating composition as claimed in claim 1, wherein the dispersion comprises, as maleic and fumaric esters of monohydric aliphatic alcohols of chain length $C_1$-$C_{18}$, esters of saturated alcohols of chain length $C_1$-$C_{18}$, or esters of monohydric aliphatic unsaturated alcohols of chain length $C_3$-$C_{18}$, preferably esters with saturated alcohols of chain length $C_4$-$C_8$, in particular dibutyl maleate or di-2-ethylhexyl maleate and/or di-2-ethylhexyl fumarate.

**5.** The food-coating composition as claimed in claim 1, wherein the dispersion comprises the monomer group of maleic and fumaric esters, if appropriate in combination with other comonomers, in an amount of preferably from 20 to 50% by weight.

**6.** The food-coating composition as claimed in claim 1, wherein the dispersion comprises, as emulsifiers, component B), sodium salts, potassium salts and ammonium salts of unbranched aliphatic carboxylic acids of chain length $C_{12}$-$C_{20}$, sodium hydroxyoctadecanesulfonate, sodium salts, potassium salts and ammonium salts of hydroxy fatty acids of chain length $C_{12}$-$C_{20}$ and their sulfonation or acetylation products, alkyl sulfates, triethanolamine salts, alkyl ($C_{10}$-$C_{20}$)sulfonates, alkyl($C_{10}$-$C_{20}$)arylsulfonates, dimethyldialkyl($C_8$-$C_{18}$)ammonium chloride, acyl-, alkyl-, oleyl- and alkylarylethoxylates and their sulfonation products, alkali metal salts of sulfosuccinic esters with aliphatic saturated monohydric alcohols of chain length $C_4$-$C_{16}$, sulfosuccinic 4-esters with polyethylene glycol ethers of monohydric aliphatic alcohols of chain length $C_{10}$-$C_{12}$(disodium salt), sulfosuccinic 4-esters with polyethylene glycol nonylphenyl ethers (disodium salt), sulfosuccinic biscyclohexyl esters (sodium salt), lignosulfonic acid and also its calcium, magnesium, sodium and ammonium salts, polyoxyethylene sorbitan monooleate containing 20 ethylene oxide groups, resin acids, hydrogenated and dehydrogenated resin acids and their alkali metal salts, dodecylated diphenyl ether disulfonic acid sodium or copolymers of ethylene oxide and propylene oxide having a minimum content of 10% by weight of ethylene oxide, preferably sodium lauryl sulfate, sodium lauryl ether sulfate, polyethylene glycol (4-20) ethers of oleyl alcohol or polyethene oxide (4-14) ethers of nonylphenol.

**7.** The food-coating composition as claimed in claim 1, wherein the dispersion comprises the emulsifiers in an amount in the range of from 0.2 to 0.85 part by weight, preferably from 0.25 to 0.5 part by weight.

**8.** The food-coating composition as claimed in claim 1, wherein the dispersion, as component C), comprises cellulose ethers such as methyl cellulose, hydroxyethyl and propyl cellulose, or sodium carboxymethyl cellulose or mixtures of these.

**9.** The food-coating composition as claimed in claim 1, wherein the dispersion comprises the cellulose ethers in an amount in the range from 0 to 0.4 part by weight, preferably from 0 to 0.3 part by weight, particularly preferably from 0 to 0.15 part by weight, and very particularly preferably no cellulose ethers.

**10.** The food-coating composition as claimed in claim 1, wherein the dispersion, as other stabilizer, comprises poly(vinyl alcohol) which has a degree of hydrolysis in the range from 85 to 90 mol% and which has a viscosity of its 4% strength by weight aqueous solution at a temperature of 20°C in the range from 2 to 70 mPa·s.

**11.** The food-coating composition as claimed in claim 1, wherein the total amount of poly(vinyl alcohol) in the dispersion is in the range from 1 to 10% by weight, based on the mass of the total monomers, preferably from 2 to 9% by weight, and particularly preferably from 3 to 8% by weight.

**12.** The food-coating composition as claimed in claim 10, wherein the other stabilizer is a mixture of poly(vinyl alcohol) s with a uniform degree of hydrolysis.

**13.** The food-coating composition as claimed in claim 1, wherein it comprises an aqueous copolymer poly(vinyl ester) dispersion which comprises

A) 100 parts by weight of a copolymer of from 40 to 95% by weight of vinyl acetate and from 5 to 60% by weight of dibutyl maleate and/or fumarate, and if appropriate other comonomers,
B) from 0.25 to 0.5 part by weight of an ethoxylated oleyl alcohol,
C) from 0 to 0.3 part by weight of a hydroxyethyl cellulose and also
D) from 3 to 8 parts by weight of poly(vinyl alcohol)

and the solids content of the dispersion is in the range from 20 to 65% by weight, preferably from 30 to 60% by weight, particularly preferably from 40 to 55% by weight.

**14.** A process for preparing an aqueous copolymer poly(vinyl ester) dispersion as a constituent in a food-coating composition as claimed in claim 1 by free-radical emulsion polymerization, in which the monomers are added in the batch process, in the feed-stream process, or in the combined batch/feed-stream process, which comprises, preferably, monomers being charged in an amount in the range from 1 to 15% by weight, based on the total amount of monomers, for starting the polymerization.

**15.** The use of an aqueous copolymer poly(vinyl ester) dispersion comprising 100 parts by weight of component A), 0.1 to 1.0 part by weight of component B), 0 to 0.45 part by weight of component C) and if appropriate component D) as claimed in claim 1 for coating foods.

**16.** The use of a food-coating composition as claimed in claim 1 in the production of hard cheese.

**Revendications**

**1.** Masse d'enrobage pour aliments contenant une dispersion aqueuse de copolymère poly(ester vinylique) qui contient :

A) 100 parties en poids d'un copolymère constitué de 40% à 95% en poids d'esters vinyliques d'acides carboxyliques aliphatiques saturés et de 5% à 60% en poids d'esters d'acides maléiques et/ou d'esters d'acides fumariques de monoalcools aliphatiques en $C_1$ à $C_{18}$ et éventuellement d'autres comonomères,
B) 0,1 à 1,0 partie en poids d'un émulsifiant,
C) 0 à 0,45 partie en poids d'un éther de cellulose, et
D) éventuellement un stabilisant,

à condition que la masse d'enrobage pour aliments ne contienne pas de mélange d'au moins deux poly(alcool vinylique) composé d'au moins 0,1 partie en poids d'au moins un poly(alcool vinylique) ayant un degré d'hydrolyse de 85% à 90% en moles, ainsi que d'au moins 0,1 partie en poids d'au moins un poly(alcool vinylique) ayant un degré d'hydrolyse supérieur à 90% en moles.

2. Masse d'enrobage pour aliments selon la revendication 1, **caractérisée en ce que** la dispersion contient des esters vinyliques d'acides carboxyliques aliphatiques saturés en $C_2$ à $C_{18}$, en particulier de l'acétate de vinyle, du propionate de vinyle, du butyrate de vinyle, de l'isobutyrate de vinyle, du pivalate de vinyle, du 2-éthyl-hexanoate de vinyle, des esters vinyliques d'acides carboxyliques $\alpha$-ramifiés contenant 9 à 11 atomes de carbone dans le groupe acide ou des esters vinyliques d'acide laurique, palmitique, myristique et stéarique ou des mélanges de ceux-ci, de préférence de l'acétate de vinyle.

3. Masse d'enrobage pour aliments selon la revendication 1, **caractérisée en ce que** la dispersion contient les esters vinyliques d'acides carboxyliques aliphatiques saturés de préférence à raison d'au moins 50% en poids.

4. Masse d'enrobage pour aliments selon la revendication 1, **caractérisée en ce que** la dispersion contient, en tant qu'esters d'acides maléiques et d'acides fumariques de monoalcools aliphatiques en $C_1$ à $C_{18}$, des esters d'alcools saturés en $C_1$ à $C_{18}$ ou des esters de monoalcools aliphatiques insaturés en $C_3$ à $C_{18}$, de préférence des esters d'alcools saturés en $C_4$ à $C_8$, en particulier le maléinate de dibutyle ou le maléinate et/ou le fumarate de di-2-éthylhexyle.

5. Masse d'enrobage pour aliments selon la revendication 1, **caractérisée en ce que** la dispersion contient le groupe monomère des esters d'acides maléiques et fumariques, éventuellement en combinaison avec d'autres comonomères, à raison de 20% à 50% en poids.

6. Masse d'enrobage pour aliments selon la revendication 1, **caractérisée en ce** la dispersion contient, en tant qu'émulsifiants, composant B), des sels de sodium, de potassium et d'ammonium d'acides carboxyliques aliphatiques à chaîne droite en $C_{12}$ à $C_{20}$, l'hydroxyoctadécanosulfonate de sodium, des sels de sodium, de potassium et d'ammonium d'hydroxyacides gras en $C_{12}$ à $C_{20}$ et de leurs produits de sulfonation ou d'acétylation, des alkylsulfates, des sels de triéthanolamine, des alkyl(en $C_{10}$ à $C_{20}$)-sulfonates, des alkyl(en $C_{10}$ à $C_{20}$)-arylsulfonates, le chlorure de diméthyldialkyl(en $C_8$ à $C_{18}$)-ammonium, des acyl-, alkyl-, oléyl- et alkylaryléthoxylates et leurs produits de sulfonation, des sels alcalins d'esters d'acides sulfosucciniques avec des monoalcools aliphatiques saturés en $C_4$ à $C_{18}$, le 4-ester d'acide sulfosuccinique avec des éthers de polyéthylèneglycol de monoacides aliphatiques en $C_{10}$ à $C_{12}$ (sel disodique), le 4-ester d'acide sulfosuccinique avec l'éther nonylphénylique de polyéthylèneglycol (sel disodique), l'ester bicyclohexylique d'acide sulfosuccinique (sel sodique), l'acide sulfolignique ainsi que ses sels de calcium, de magnésium, de sodium et d'ammonium, le mono-oléate de polyoxyéthylènesorbitan contenant 20 groupes oxyde d'éthylène, des acides résiniques, des acides résiniques hydrogénés et déhydrogénés ainsi que leurs sels alcalins, le sel sodique de l'acide diphényléther disulfonique dodécylé ou des copolymères d'oxyde d'éthylène et d'oxyde de propylène ayant une teneur minimale en oxyde d'éthylène de 10% en poids, de préférence le laurylsulfate de sodium, le lauryléthersulfate de sodium, le (4-20)éther de polyéthylèneglycol d'alcool oléylique ou le (4-14)éther de poly(oxyde d'éthène) de nonylphénol.

7. Masse d'enrobage pour aliments selon la revendication 1, **caractérisée en ce que** la dispersion contient les émulsifiants à raison de 0,2 à 0,85 partie en poids, de préférence de 0,25 à 0,5 partie en poids.

8. Masse d'enrobage pour aliments selon la revendication 1, **caractérisée en ce que** la dispersion contient, en tant que composant C), des éthers de cellulose tels que la méthylcellulose, l'hydroxyéthyl- et la propyl-cellulose ou la carboxyméthylcellulose sodique ou leurs mélanges.

9. Masse d'enrobage pour aliments selon la revendication 1, **caractérisée en ce que** la dispersion contient les éthers de cellulose à raison de 0 à 0,4 partie en poids, de préférence de 0 à 0,3 partie en poids, de manière plus particulièrement préférée de 0 à 0,15 partie en poids et de manière tout particulièrement préférée, elle est exempte d'éther de cellulose.

10. Masse d'enrobage pour aliments selon la revendication 1, **caractérisée en ce que** la dispersion contient, en tant qu'autres stabilisants, un poly(alcool vinylique) ayant un degré d'hydrolyse dans la gamme de 85% à 90% en moles et dont une solution aqueuse à 4% en poids présente une viscosité à une température de 20°C dans la gamme de 2 à 70 mPa.s.

**11.** Masse d'enrobage pour aliments selon la revendication 1, **caractérisée en ce que** la quantité totale de poly(alcool vinylique) présent dans la dispersion se situe, par rapport à la masse totale des monomères, dans la gamme de 1% à 10% en poids, de préférence de 2% à 9% en poids, et de manière plus particulièrement préférée de 3% à 8% en poids.

**12.** Masse d'enrobage pour aliments selon la revendication 10, **caractérisée en ce que** l'autre stabilisant est un mélange de poly(alcool de vinyle) ayant un degré d'hydrolyse homogène.

**13.** Masse d'enrobage pour aliments selon la revendication 1, **caractérisée en ce qu'**elle contient une dispersion aqueuse de copolymère poly(ester vinylique) qui contient :

A) 100 parties en poids d'un copolymère constitué de 40% à 95% en poids d'acétate de vinyle et de 5% à 60% en poids de maléinate de dibutyle et/ou de fumarate, et éventuellement d'autres comonomères,
B) 0,25 à 0,5 partie en poids d'un alcool oléylique éthoxylé,
C) 0 à 0,3 partie en poids d'une hydroxyéthylcellulose, ainsi que
D) 3 à 8 parties en poids de poly(alcool vinylique)

et **en ce que** la teneur en matières solides de la dispersion se situe dans la gamme de 20% à 65% en poids, de préférence de 30% à 60% en poids, de manière plus particulièrement préférée de 40% à 55% en poids.

**14.** Procédé de préparation d'une dispersion aqueuse de copolymère poly(ester vinylique) en tant que composant d'une masse d'enrobage pour aliments selon la revendication 1, par polymérisation radicalaire en émulsion, dans laquelle l'addition des monomères est réalisée selon un procédé discontinu, selon un procédé semi-continu ou selon un procédé combiné discontinu/semi-continu dans lequel, pour amorcer la polymérisation, les monomères sont introduits de préférence à raison de 1% à 15% en poids par rapport à la quantité totale des monomères.

**15.** Utilisation d'une dispersion aqueuse de copolymère poly(ester vinylique) contenant 100 parties en poids de composant A), 0,1 à 1,0 partie en poids de composant B), 0 à 0,45 partie en poids de composant C) et éventuellement un composant D) selon la revendication 1 pour enrober des aliments.

**16.** Utilisation d'une masse d'enrobage pour aliments selon la revendication 1 dans le cadre de la fabrication de fromage à pâte dure.

**EP 1 469 017 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- PL 172130 B
- DE 10163586

- WO 03054041 A